# EUROPEAN PATENT APPLICATION

(11) **EP 1 696 659 A2**
(43) Date of publication of application: **30.08.2006**
(21) Application number: 06003650.6
(22) Date of filing: 22.02.2006
(51) Int. Cl.: H04N 1/405, H04N 1/40

(54) **Halftoning device, image processing apparatus, printing apparatus, halftoning method, and program**

(30) Priority: 23.02.2005 JP 2005048075
(71) Applicant: SONY CORPORATION, Tokyo (JP)
(72) Inventor: Ujiie, Ichiro, Shinagawa-ku Tokyo (JP); Kuwahara, Soichi, Shinagawa-ku Tokyo (JP); Ishihara, Mitsugu, Machida-shi Tokyo (JP)
(74) Representative: Müller - Hoffmann & Partner

(57) **Abstract**

A tone converting device to convert an image density signal having m-valued tone into an image density signal having binary tone, m being a natural number, is provided. The tone converting device includes an input signal accumulating-and-adding unit to accumulate and add sequentially input m-valued image density signals so as to generate a first cumulative sum; an output signal accumulating-and-adding unit to accumulate and add binary image density signals as converted output so as to generate a second cumulative sum; and an output tone setting unit to set a smaller value among two values to an output conversion value when the second cumulative sum is larger than or equal to the first cumulative sum, and to set a larger value among the two values to the output conversion value when the second cumulative sum is smaller than the first cumulative sum.

## Description

### CROSS REFERENCES TO RELATED APPLICATIONS

The present invention contains subject matter related to Japanese Patent Application JP 2005-048075 filed in the Japanese Patent Office on February 23, 2005, the entire contents of which are incorporated herein by reference.

### BACKGROUND OF THE INVENTION

### 1. Field of the Invention

The present invention relates to a tone converting device to convert m-valued tone (m is a natural number) into n-valued tone (n is a natural number smaller than m). Also, the present invention relates to an image processing apparatus provided with the tone converting device. Also, the present invention relates to a printing apparatus provided with the tone converting device. Also, the present invention relates to a tone converting method. Also, the present invention relates to a program allowing a computer to execute tone conversion.

### 2. Description of the Related Art

Typical methods for converting the level of tone include a systematic dither method and an error diffusion method.

Among these methods, in the systematic dither method, a sub matrix (dither matrix) of nxn thresholds is overlaid on an input image and light-and-dark levels of the corresponding respective pixels are compared with the thresholds, so that output tone is determined.

On the other hand, in the error diffusion method, a conversion error is added to pre-conversion forward pixels, so that the conversion error is positively reflected on a converting process thereafter. One conversion error is reflected on a plurality of forward pixels in a diffusive manner. In the diffusion of a conversion error, a different weight (coefficient) is used in accordance with a diffused position.

Patent Document 1: Japanese Unexamined Patent Application Publication No. 2002-171407

### SUMMARY OF THE INVENTION

The systematic dither method is more advantageous than the error diffusion method in that the processing time is shorter, but is more disadvantageous than the error diffusion method in terms of tone reproductivity. Of course, a reverse characteristic is seen in the error diffusion method.

As described above, both the systematic dither method and the error diffusion method have advantages and disadvantages, and these methods are selectively used in accordance with a purpose or application. For example, when an image including a large halftone portion, such as a natural image, is to be printed, the error diffusion method is selected although the processing time is long.

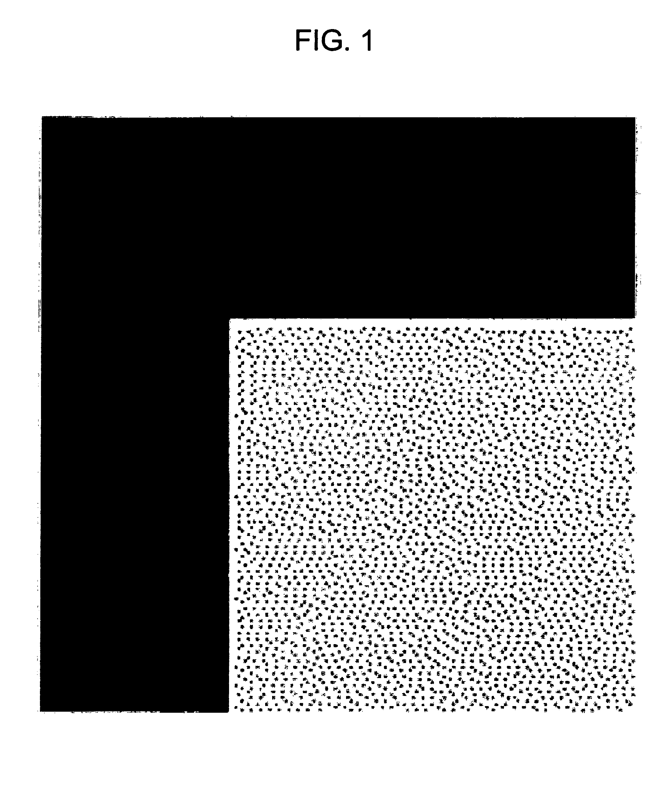

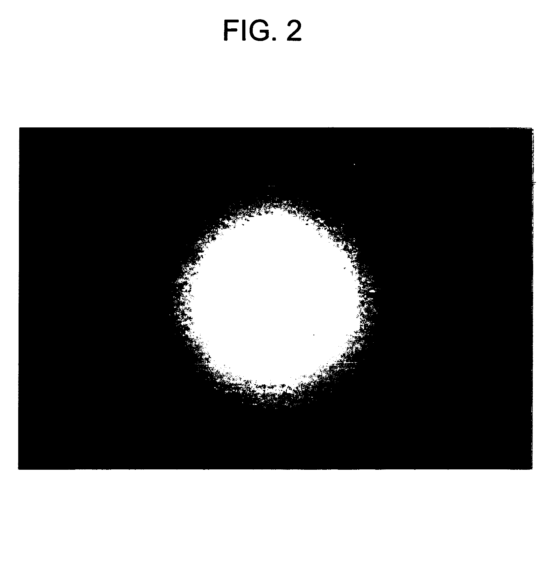

In the error diffusion method, response of an output tone value to a sudden change in an input tone value delays, which is a problem unique to a feedback system. This delay causes a "sweeping phenomenon" or "pseudo contour" and results in degradation of image quality. Fig. 1 shows an example where a "sweeping phenomenon" occurs. As can be seen in the figure, a white frame appears at the border of dark and light areas. Fig. 2 shows an example where "pseudo contour" occurs. Fig. 2 shows a print example obtained when the tone of a hemisphere gradation image is converted.

The inventors focused attention on the above-described technical problems and suggest a new tone converting technique realizing a shorter processing time and favorable tone reproductivity.

For example, the inventors suggest a tone converting technique of converting an image density signal having m-valued tone into an image density signal having binary tone, m being a natural number. The tone converting technique includes the steps of:
(a) accumulating and adding sequentially input m-valued image density signals so as to generate a first cumulative sum;
(b) accumulating and adding binary image density signals as converted output so as to generate a second cumulative sum; and
(c) setting a smaller value among two values to an output conversion value when the first cumulative sum is equal to the second cumulative sum or when the second cumulative sum is larger than the first cumulative sum, and setting a larger value among the two values to the output conversion value when the second cumulative sum is smaller than the first cumulative sum.

Also, the inventors suggest a tone converting technique of converting an image density signal having m-valued tone into an image density signal having n-valued tone, m being a natural number and n being a natural number smaller than m. The tone converting technique includes the steps of:
(a) accumulating and adding sequentially input m-valued image density signals so as to generate a first cumulative sum;
(b) accumulating and adding n-valued image density signals as converted output so as to generate a second cumulative sum;
(c) calculating a differential value between the first cumulative sum and the second cumulative sum; and
(d) comparing the calculated differential value with n-valued thresholds and setting the threshold corresponding to the comparison result as an output conversion value.

By using the tone converting technique according to an embodiment of the present invention, an m-valued image density signal can be converted to a binary image density signal only by comparing the first cumulative tone value with the second cumulative tone value.

The time required for conversion is short because the converting operation is simple. Further, since an error buffer is unnecessary, neither "pseudo contour" nor "sweeping phenomenon" occurs.

A conversion error is reflected when the first cumulative sum is compared with the second cumulative sum. That is, the conversion error is positively resolved at a subsequent conversion. Accordingly, halftone reproductivity can be enhanced.

By using the tone converting technique according to an embodiment of the present invention, an m-valued image density signal can be converted to an n-valued image density signal only by comparing the differential value between the first and second cumulative sums with n-valued thresholds.

In this case, too, the time required for conversion is short because the converting operation is simple. Further, since an error buffer is unnecessary, neither "pseudo contour" nor "sweeping phenomenon" occurs.

A conversion error is reflected when the differential value between the first cumulative sum and the second cumulative sum is calculated. That is, the conversion error is positively resolved at a subsequent conversion. Accordingly, halftone reproductivity can be enhanced.

### BRIEF DESCRIPTION OF THE DRAWINGS

Fig. 1 shows a sweeping phenomenon that occurs when an error diffusion method is used;
Fig. 2 shows pseudo contour that occurs when the error diffusion method is used;
Fig. 3 shows a configuration of a tone converting device according to a first embodiment of the present invention;
Fig. 4 shows raster scanning on an entire image;
Figs. 5A to 5C illustrate an effect of improvement in image quality in the tone converting device according to the first embodiment;
Fig. 6 shows a configuration of a tone converting device according to a second embodiment of the present invention;
Fig. 7 shows an operation principle of the tone converting device according to the second embodiment;
Fig. 8 shows an operation principle of the tone converting device using the error diffusion method;
Fig. 9 shows a print example in which a sweeping phenomenon is overcome;
Fig. 10 shows a print example in which pseudo contour is overcome;
Fig. 11 shows a print example in a case where conversion errors are periodically resolved;
Fig. 12 shows a configuration of a tone converting device according to a third embodiment of the present invention;
Fig. 13 shows a configuration of a tone converting device according to a modification of the third embodiment;
Fig. 14 shows a configuration of a tone converting device according to a modification of the third embodiment;
Fig. 15 shows a state where an entire screen is divided into a plurality of parts;
Fig. 16 shows a configuration of a tone converting device according to a fourth embodiment of the present invention;
Fig. 17 shows a horizontal turning scan pattern;
Fig. 18 shows a spiral scan pattern;
Fig. 19 shows a zigzag scan pattern;
Fig. 20 shows a zigzag-combination scan pattern;
Fig. 21 shows a print example obtained when the zigzag-combination scan pattern is applied;
Fig. 22 shows a print example obtained when the zigzag-combination scan pattern and disturbance by random numbers are applied together; and
Fig. 23 shows an example of a configuration of a printing apparatus.

### DESCRIPTION OF THE PREFERRED EMBODIMENTS

Hereinafter, techniques according to embodiments of the present invention are described.

In this specification, a known or well-known technique of a corresponding technical field is applied to a part that is not specifically shown in the drawings or is not described.

Each of the following embodiments is one embodiment of the present invention, and the present invention is not limited to these embodiments.

### (A) Tone converting device (halftoning device)

### (a) First Embodiment

### (i) Example of configuration

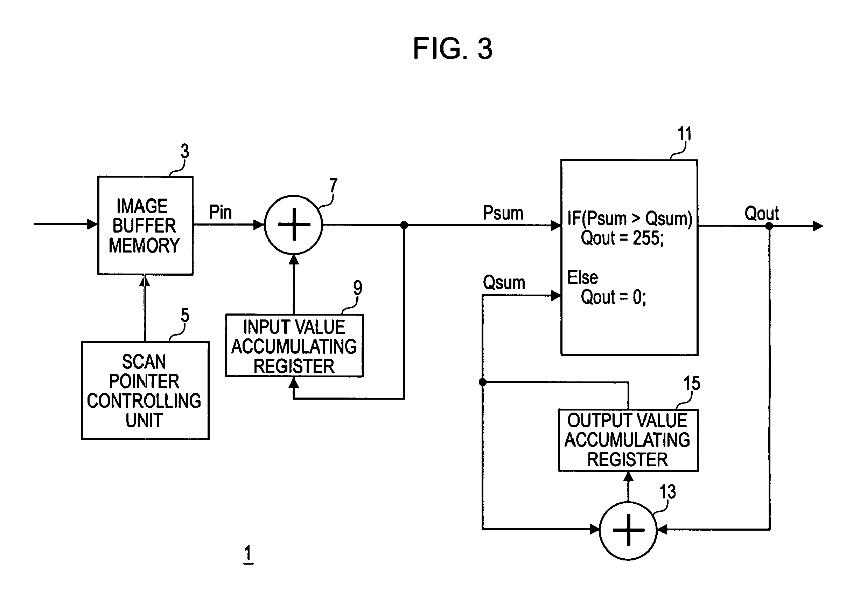

Fig. 3 shows an example of a configuration of a tone converting device to convert an m-valued image density signal to a binary image density signal.

The tone converting device 1 includes an image buffer memory 3, a scan pointer controlling unit 5, an input value accumulating-and-adding unit 7, an input value accumulating register 9, an output value setting unit 11, an output value accumulating-and-adding unit 13, and an output value accumulating register 15.

The image buffer memory 3 is a storage device to temporarily store image density signals corresponding to an image to be printed. For example, a semiconductor storage device, a hard disk, or another magnetic storage device is used. The image density signal is a signal indicating the density (tone value) of each pixel. In this case, the image density signal is indicated with m (m is a natural number of 3 or more).

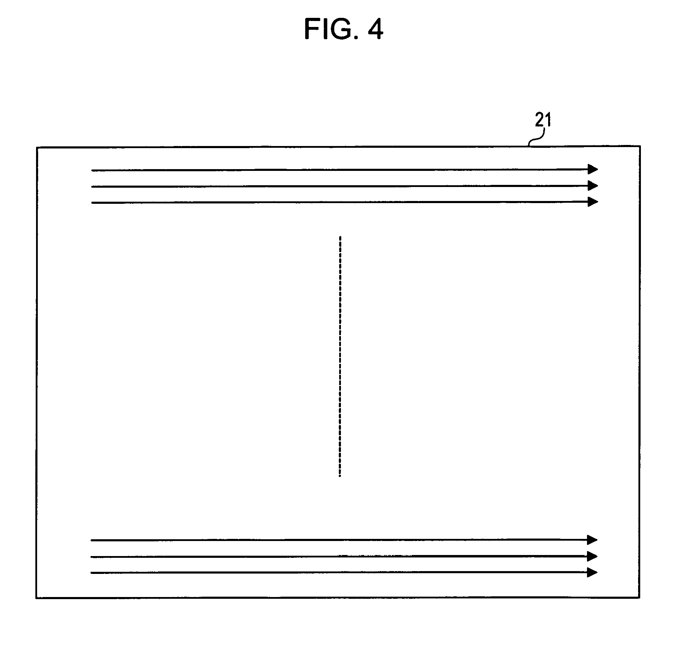

The scan pointer controlling unit 5 is a controlling device to generate a read position (scan pointer) of image density signals. Fig. 4 shows an example where a scan pointer is generated. The scan pointer controlling unit 5 generates a scan pointer, with an entire screen being a scan area. In Fig. 4, each line is scanned from the left end to the right end of a screen 21. After one line has been scanned, the next line is scanned. The arrows shown in the figure indicate the scanning trace of the scan pointer.

The input value accumulating-and-adding unit 7 is a processing device to add sequentially input image density signals to an input cumulative value Psum that has already been calculated for backward pixels and generate a new input cumulative value Psum. For example, an adder is used as the input value accumulating-and-adding unit 7.

The input cumulative value Psum is supplied to the input value accumulating register 9 and the output value setting unit 11. The input cumulative value Psum corresponds to a first cumulative sum.

The input value accumulating register 9 is a storage device to temporarily store an input cumulative value Psum calculated for backward pixels. For example, a semiconductor storage device, a hard disk, or another magnetic storage device is used. The input value accumulating register 9 and the input value accumulating-and-adding unit 7 constitute an input signal accumulating-and-adding unit.

The output value setting unit 11 is a processing device to compare an input cumulative value Psum with an output cumulative value Qsum and sets an output conversion value Qout to one of "255" and "0".

In this embodiment, the output value setting unit 11 sets the output conversion value to "0" when the input cumulative value Psum is equal to the output cumulative value Qsum or when the output cumulative value Qsum is larger than the input cumulative value Psum (Psum ≤ Qsum). When the output cumulative value Qsum is smaller than the input cumulative value Psum (Psum > Qsum), the output value setting unit 11 sets the output conversion value to "255".

The output value accumulating-and-adding unit 13 is a processing device to add sequentially input output conversion values Qout to an output cumulative value Qsum that has already been calculated for backward pixels and generate a new output cumulative value Qsum. For example, an adder is used as the output value accumulating-and-adding unit 13.

The output cumulative value Qsum is supplied to the output value accumulating register 15. The output cumulative value Qsum corresponds to a second cumulative sum.

The output value accumulating register 15 is a storage device to temporarily store an output cumulative value Qsum calculated for backward pixels. For example, a semiconductor storage device, a hard disk, or another magnetic storage device is used. The output value accumulating register 15 and the output value accumulating-and-adding unit 13 constitute an output signal accumulating-and-adding unit.

### (ii) Example of operation

In the tone converting device 1, a converting operation progresses in the following manner. First, a scan pointer is given from the scan pointer controlling unit 5 to the image buffer memory 3.

Accordingly, image density signals corresponding to a first pixel to a target pixel Pin of an image to be printed are sequentially read from the image buffer memory 3. Each image density signal has a tone value of any of "0" to "m-1 (=255)".

The input value accumulating-and-adding unit 7 calculates a cumulative value (input cumulative value Psum) of the m-valued image density signals corresponding to the first pixel to the target pixel Pin of the image to be printed.

At the same time, the output value accumulating-and-adding unit 13 calculates a cumulative value (output cumulative value Qsum) of binary image density signals corresponding to the first pixel to the target pixel Pin of the image to be printed.

The output value setting unit 11 compares the input cumulative value Psum with the output cumulative value Qsum every time the two values are updated. If the input cumulative value Psum is larger than the output cumulative value Qsum, the output value setting unit 11 outputs "m-1 (=255)". Otherwise, the output value setting unit 11 outputs "0".

By using this setting method, the output conversion value Qout can be set so that the difference between the input cumulative value Psum and the output cumulative value Qsum, that is, a conversion error, is always minimized. Thus, tone information of an original image can be maintained to the last pixel of the image.

This is because the conversion error is cumulatively held for subsequent one or a plurality of pixels and is reflected on tone conversion. Accordingly, enhanced tone reproductivity can be realized.

### (iii) Advantages

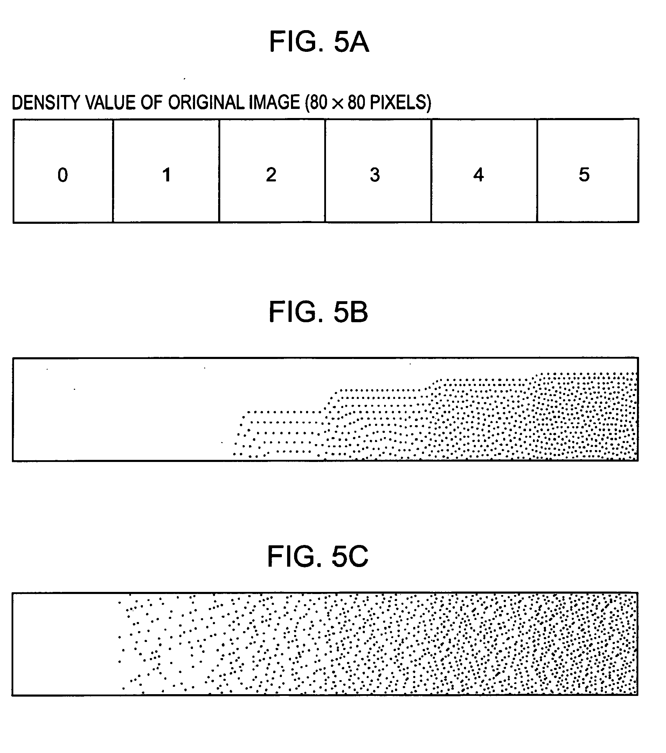

Figs. 5A to 5C show a print example using the tone converting device 1. Fig. 5A shows an original image pattern including six continuous square patterns of 80 pixels x 80 pixels. Figs. 5A to 5C show a case where the tone value of the respective square patterns increases in the arranged order. In the figures, the tone values are expressed by "0", "1", "2", "3", "4", and "5".

Fig. 5B shows a print result obtained when a typical error diffusion method is used. As can be seen in the figure, start of tone reproduction delays. Specifically, tone reproduction starts at a position corresponding to the tone value "2". In other words, tone reproduction is not performed at a position corresponding to the tone value "1". This phenomenon is a "sweeping phenomenon".

Fig. 5C shows a print result obtained when the tone converting device 1 is used. As can be seen in the figure, tone reproduction accurately matches the tone values.

As described above, in the method using the tone converting device 1, neither a diffusion matrix nor an error buffer memory is necessary unlike in the error diffusion method. In other words, delay of correction due to charge and discharge of a conversion error need not be considered.

Further, a converting process is performed at higher speed and neither "sweeping phenomenon" nor "pseudo contour" occurs, and thus the image quality of an original image can be faithfully reproduced.

In the method using the tone converting device 1, truncation of a conversion error due to part of the diffusion matrix off an image does not occur even after the scan pointer reaches the pixels at both ends of the image. In other words, when the tone converting device 1 is used, a conversion error can be directly reflected on the subsequent pixels to be scanned. As can be understood, the method using the tone converting device 1 is more advantageous than the existing converting methods in terms of reflection efficiency of a conversion error.

### (b) Second Embodiment

### (i) Example of configuration

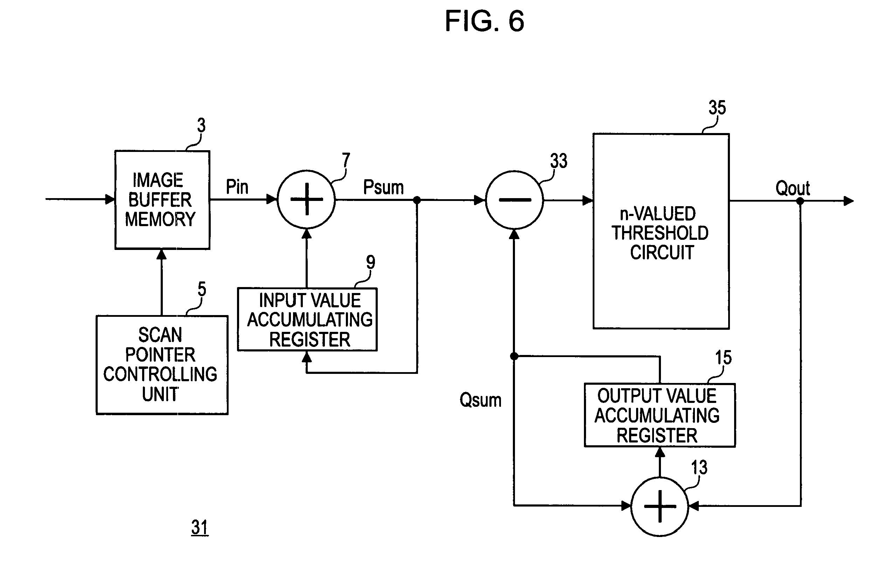

Fig. 6 shows an example of a configuration of a tone converting device to convert an m-valued image density signal to an n-valued image density signal (n is a natural number of 2 or more and smaller than m). In Fig. 6, elements corresponding to those in Fig. 3 are denoted by the same reference numerals.

The tone converting device 31 includes an image buffer memory 3, a scan pointer controlling unit 5, an input value accumulating-and-adding unit 7, an input value accumulating register 9, an input-output differential calculating unit 33, an n-valued threshold circuit 35, an output value accumulating-and-adding unit 13, and an output value accumulating register 15.

The basic principle of tone conversion of this embodiment is the same as that of the first embodiment. That is, an output conversion value is set so that an output cumulative value Qsum follows an input cumulative value Psum.

In the tone converting device 31, however, a differential value between the input cumulative value Psum and the output cumulative value Qsum is compared with n-valued thresholds, and m-valued images density signals are converted to n-valued image density signals.

Hereinafter, the input-output differential calculating unit 33 and the n-valued threshold circuit 35, which are the elements unique to the tone converting device 31, are described.

The input-output differential calculating unit 33 is a processing device to calculate a differential value between an input cumulative value Psum and an output cumulative value Qsum. For example, a subtracter is used.

The differential value is calculated by subtracting the output cumulative value Qsum from the input cumulative value Psum. Note that, a conversion error that has not been reflected on an output conversion value Qout remains in the input cumulative value Psum.

Thus, a cumulative value of conversion errors occurred in the forward pixels is always reflected on the calculated differential value.

The n-valued threshold circuit 35 is a processing device to output a threshold corresponding to a differential value as an output conversion value. For example, a threshold table is used. The n-valued threshold circuit 35 compares a differential value with n thresholds and sets a largest value among the thresholds smaller than the differential value to an output conversion value. The n-valued threshold circuit 35 corresponds to an output tone setting unit.

### (ii) Example of operation

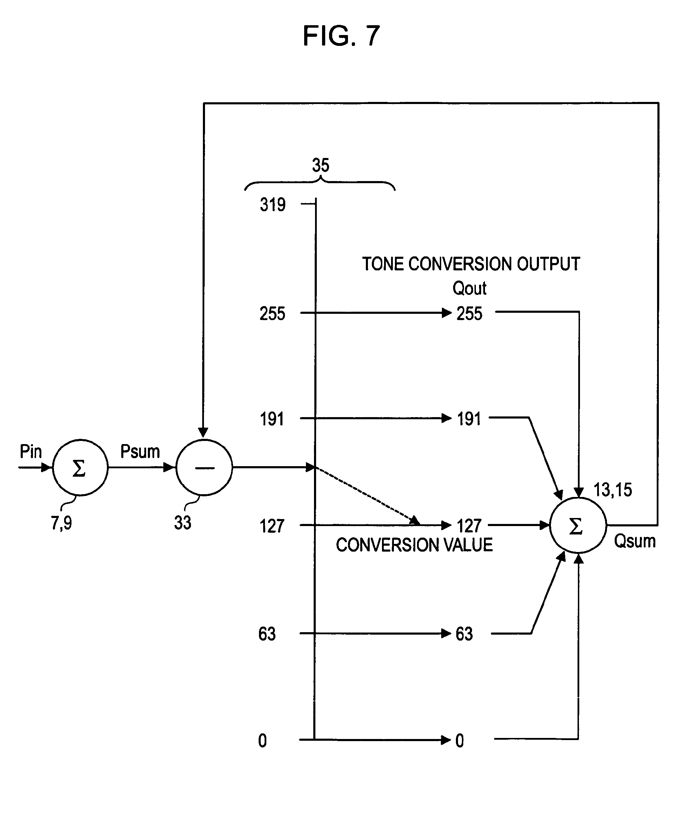

Fig. 7 shows a processing image in a case where m-valued tone is converted to five-valued tone. Calculation of the input cumulative value Psum and the output cumulative value Qsum is the same as in the first embodiment.

As shown in Fig. 7, the differential value calculated by the input-output differential calculating unit 33 is converted to any of "0", "63", "127", "191", and "255" by the n-valued threshold circuit 35. In Fig. 7, the output conversion value Qout is "127". This converting operation is repeatedly performed for each pixel.

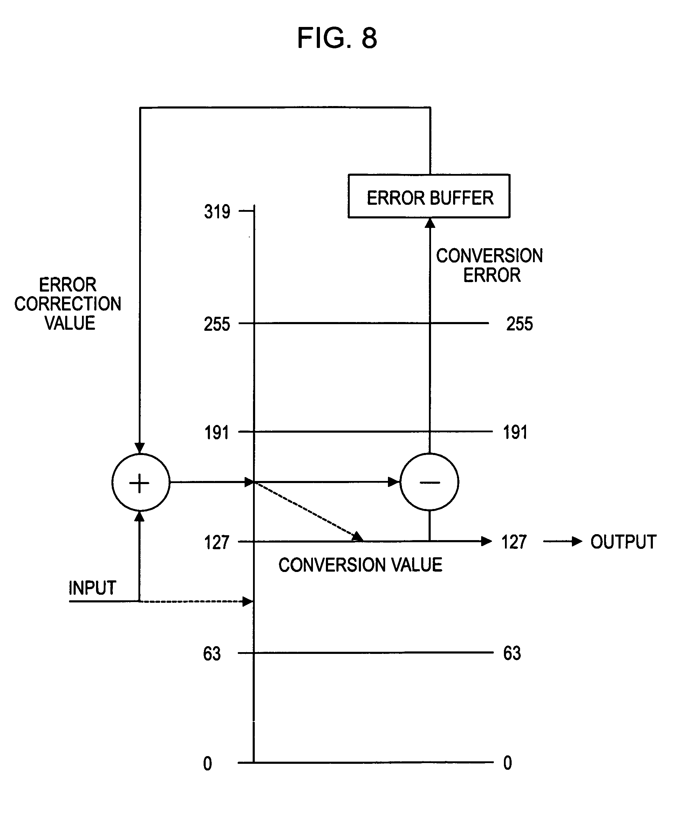

As reference, a processing image in the error diffusion method is shown in Fig. 8. In the error diffusion method, a conversion error needs to be calculated for each pixel and an error buffer to store the calculated conversion errors is required.

In contrast to this, these processes are unnecessary in the tone converting device 31. This contributes to the above-described higher speed in a converting operation.

### (iii) Advantages

In this embodiment, too, as in the first embodiment, enhanced tone reproductivity and a converting operation without excessive response delay can be realized. That is, tone reproduction reflecting a conversion error can be realized without causing a "sweeping phenomenon" or "pseudo contour".

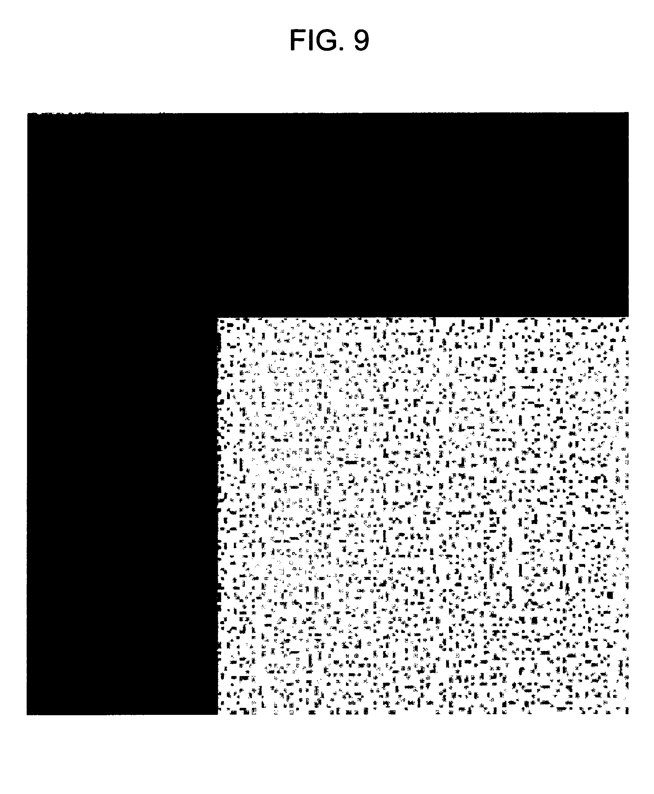

Fig. 9 shows a print example obtained when an image including parts of significantly different densities is converted to a four-valued tone image by using the tone converting device 31. As can be seen in the figure, a white frame does not appear at the border between the dark area and the light area, unlike in the print example (shown in Fig. 1) obtained when the image is converted to a four-valued tone image by using the error diffusion method.

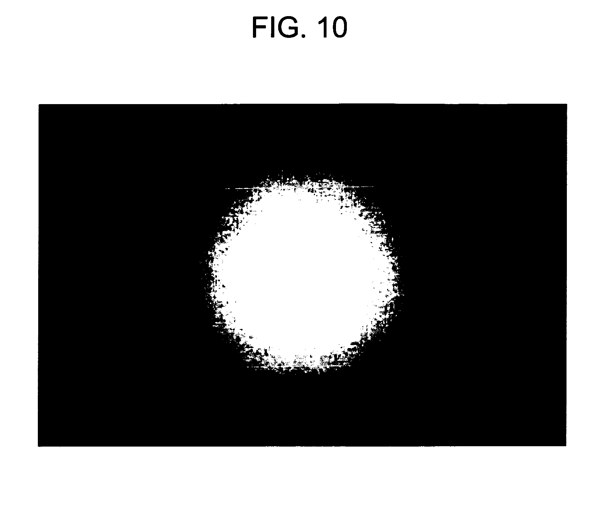

Fig. 10 shows a print example obtained when a gradation image of a hemisphere is converted to a five-valued tone image by using the tone converting device 31. As can be seen in the figure, "pseudo contour" does not appear unlike in the print example (shown in Fig. 2) obtained when the image is converted to a five-valued tone image by using the error diffusion method.

### (c) Third Embodiment

In the above-described two embodiments, a very favorable effect can be obtained in printing of a natural image. However, in these embodiments, dots to resolve conversion errors may appear with regularity if even image density signals having a predetermined value approximate to a threshold are sequentially input.

For example, in tone conversion to five-valued tone, when given thresholds are "0", "63", "127", "191", and "255" and when all pixels of an input image have a tone value of "128", a conversion error of value "1" is accumulated in each pixel, and the error is resolved at every 64 pixels. That is, an output conversion value Qout of "191" is output at every 64 pixels.

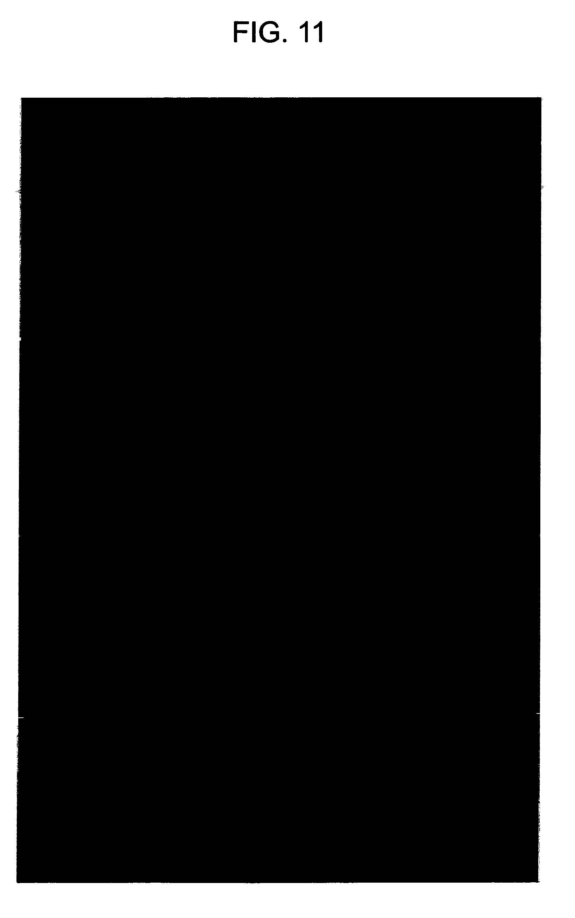

Therefore, if an image size satisfies an adequate condition, high-luminance dots, which periodically appear, successively appear at a specific position. Fig. 11 shows an example of such a case.

This phenomenon occurs only in a limited case. However, this phenomenon degrades the quality of a printed image.

Then, the inventors suggest a method for suppressing this periodicity.

In this embodiment, the problem is solved by disrupting the periodicity of differential values input to the n-valued threshold circuit 35.

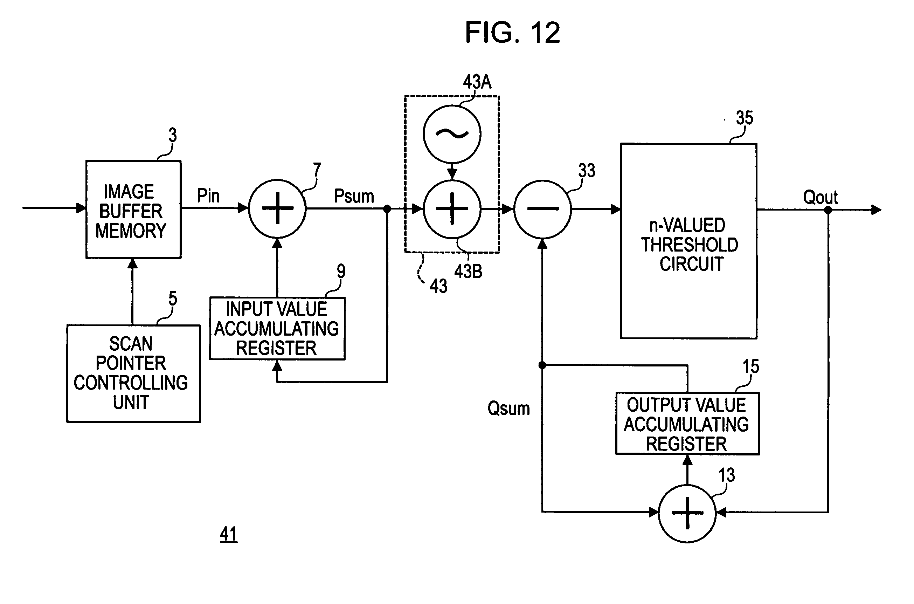

Fig. 12 shows a modification of the tone converting device to convert an m-valued image density signal to an n-valued image density signal (n is a natural number of 2 or more and smaller than m). In Fig. 12, elements corresponding to those in Fig. 6 are denoted by the same reference numerals.

The tone converting device 41 includes an image buffer memory 3, a scan pointer controlling unit 5, an input value accumulating-and-adding unit 7, an input value accumulating register 9, an input-output differential calculating unit 33, an n-valued threshold circuit 35, an output value accumulating-and-adding unit 13, an output value accumulating register 15, and a periodicity suppressing unit 43.

As shown in Fig. 12, the element unique to the tone converting device 41 is only the periodicity suppressing unit 43. Therefore, only the periodicity suppressing unit 43 is described here.

The periodicity suppressing unit 43 includes a random number generating unit 43A and an adding unit 43B. The random number generating unit 43A generates a random number to be superimposed on an input cumulative value Psum, and the adding unit 43B superimposes the random number onto the input cumulative value Psum.

Herein, the random number may be either a positive value or a negative value. Typically, the effect is smaller as the maximum amplitude of the random number is smaller, and the effect is larger as the maximum amplitude is larger. Incidentally, when the maximum amplitude is large, the roughness of an image becomes significant.

According to an experiment result obtained by the inventors, about 1/16 of an inter-threshold level is appropriate. Thus, when the inter-threshold level is "64", a favorable result can be obtained when random numbers are generated in the range of ±4.

As a result, in addition to the basic advantages obtained in the first and second embodiments, the following advantage can be obtained. That is, even if a plurality of pixels of the same tone value continuously appear, the image quality can be improved by suppressing the periodicity of timing to resolve a conversion error.

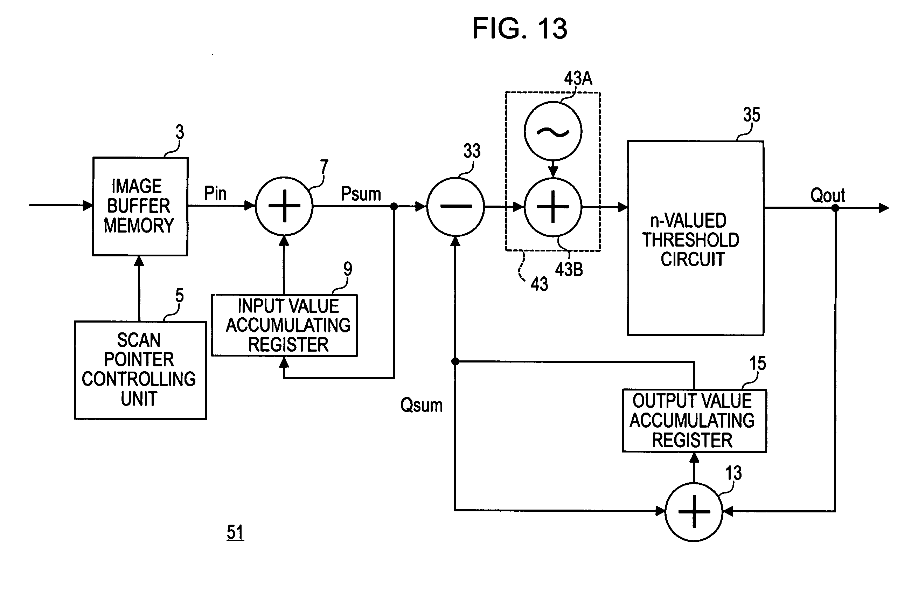

The position where a random number is superimposed is not limited to the case shown in Fig. 12. For example, as in a tone converting device 51 shown in Fig. 13, a random number may be superimposed on a differential value. The basic operation of the tone converting device 51 is the same as that of the tone converting device 41 shown in Fig. 12, and thus the corresponding description is not repeated.

It can be considered that superimposing a random number on a signal input to the n-valued threshold circuit 35 is the same as superimposing a random number on a threshold.

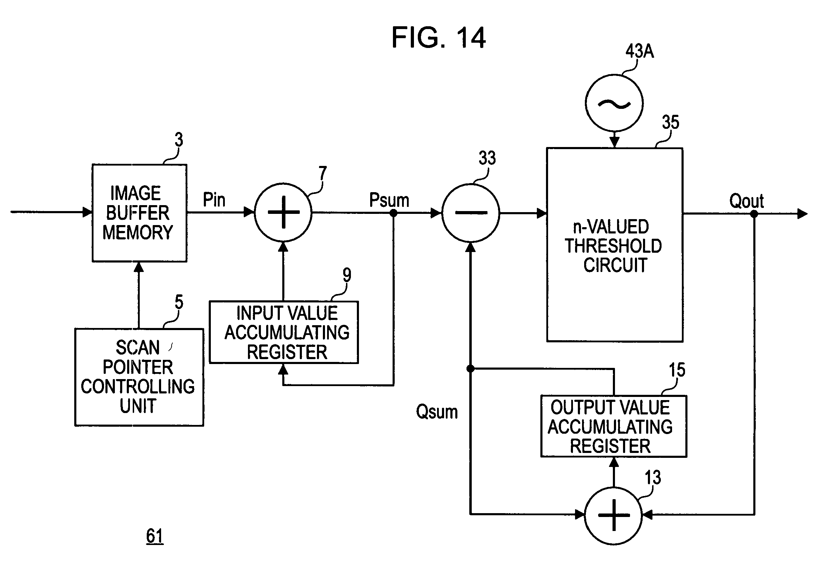

Therefore, as in a tone converting device 61 shown in Fig. 14, a random number may be superimposed on an n-valued threshold. For example, output conversion values corresponding to the respective pixels may be set by using basic n thresholds added with random numbers.

### (d) Fourth Embodiment

Now, a method for cancelling a conversion error at as close position as possible to the pixel where the conversion error occurred is described.

As described above, in typical raster scanning, a conversion error is cancelled at the last pixel among sequential pixels that are horizontally aligned in one line. For example, a conversion error occurred in a first pixel propagates to an n-th pixel on a horizontal line.

However, in the tone converting method suggested by the inventors of the present invention, a diffusion matrix to weight a conversion error is not used, as described above.

Therefore, generation of a scan pointer need not always be in raster scanning.

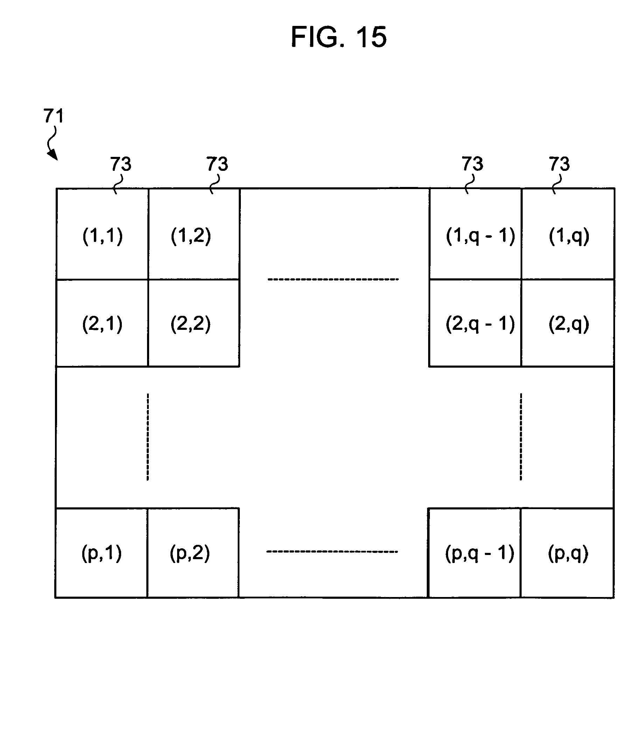

The inventors suggest a method for generating a scan pointer in each of a plurality of parts 73 included in an entire image 71, as shown in Fig. 15. Fig. 15 shows a case where the entire image 71 is divided into q parts 73 in the horizontal direction and is divided into p parts 73 in the vertical direction. That is, the entire image 71 is divided into pxq parts 73.

Each part 73 is defined by nxn pixels. In this way, by dividing the entire image 71 into the plurality of parts 73 and generating a scan pointer to indicate a read position of image density signals in each part 73, periodical cancellation of conversion errors can be dispersed in the horizontal and vertical directions.

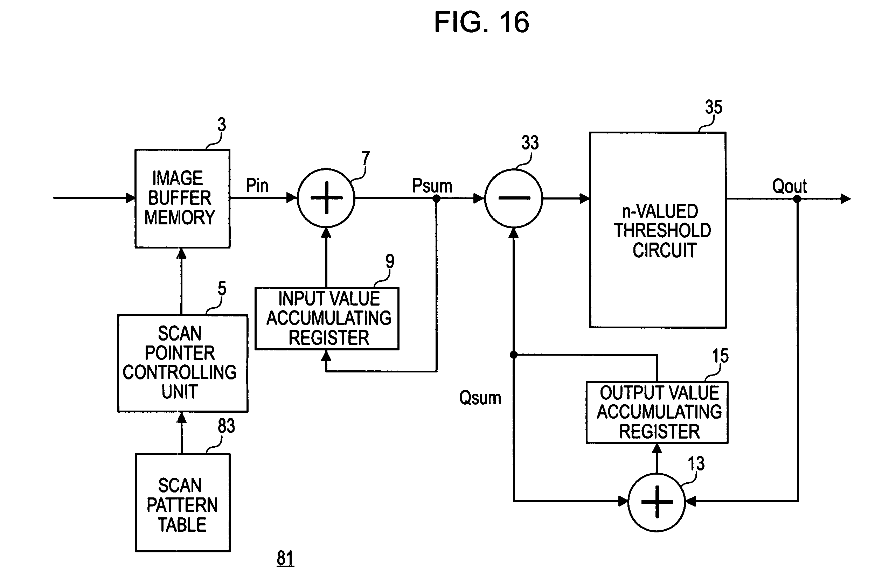

Fig. 16 shows an example of a configuration of a tone converting device 81 adopting this scanning method. In Fig. 16, elements corresponding to those in Fig. 6 are denoted by the same reference numerals.

The tone converting device 81 includes an image buffer memory 3, a scan pointer controlling unit 5, an input value accumulating-and-adding unit 7, an input value accumulating register 9, an input-output differential calculating unit 33, an n-valued threshold circuit 35, an output value accumulating-and-adding unit 13, an output value accumulating register 15, and a scan pattern table 83.

As shown in Fig. 16, the element unique to the tone converting device 81 is only the scan pattern table 83. Thus, the scan pattern table 83 is described below.

The scan pattern table 83 is a storage device to store scan patterns generated by the scan pointer controlling unit 5. The following are representative examples of the scan patterns.
(i) horizontal turning pattern
(ii) spiral pattern
(iii) zigzag pattern
(iv) zigzag combination pattern
(v) random pattern

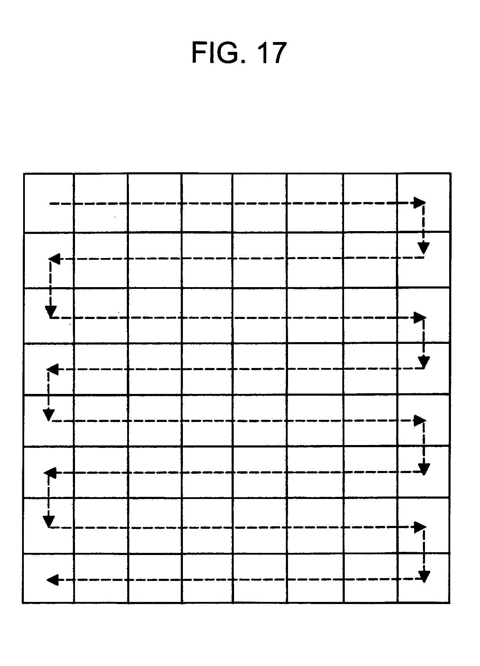

Fig. 17 shows a horizontal turning scan pattern. In Fig. 17, the part 73 is composed of 8x8=64 pixels. In the scan pattern shown in Fig. 17, the part 73 is scanned in the horizontal direction, the scanning direction being reversed at each end. Accordingly, cancellation of a conversion error is more likely to occur in the part 73 including a pixel where the conversion error occurred.

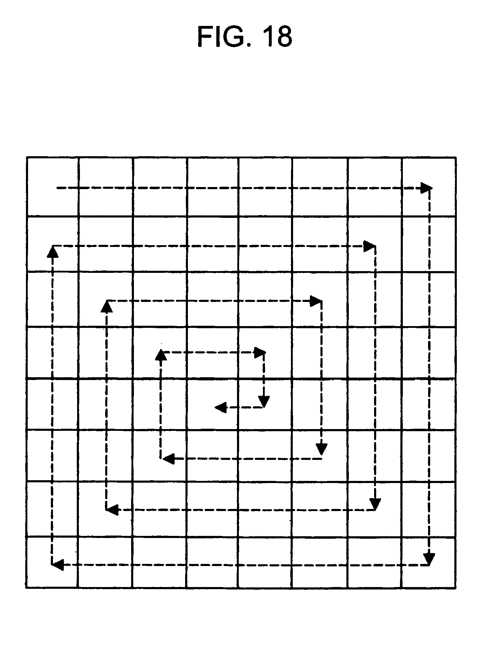

Fig. 18 shows a spiral scan pattern. In Fig. 18, the part 73 is composed of 8×8=64 pixels. In the scan pattern shown in Fig. 18, scanning in the horizontal direction and scanning in the vertical direction are alternately repeated toward the center of the part 73. Accordingly, cancellation of a conversion error is more likely to occur in the part 73 including a pixel where the conversion error occurred. Alternatively, scanning may be performed from the center of the part 73 to the periphery.

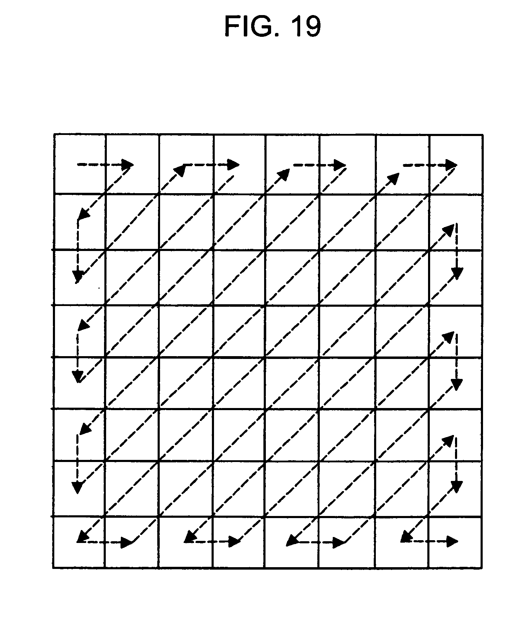

Fig. 19 shows a zigzag scan pattern. In Fig. 19, the part 73 is composed of 8x8=64 pixels. In the scan pattern shown in Fig. 19, scanning in the horizontal direction, scanning in a slanting direction, and scanning in the vertical direction are combined in the part 73. Accordingly, cancellation of a conversion error is more likely to occur in the part 73 including a pixel where the conversion error occurred. Of course, another scan pattern can be used.

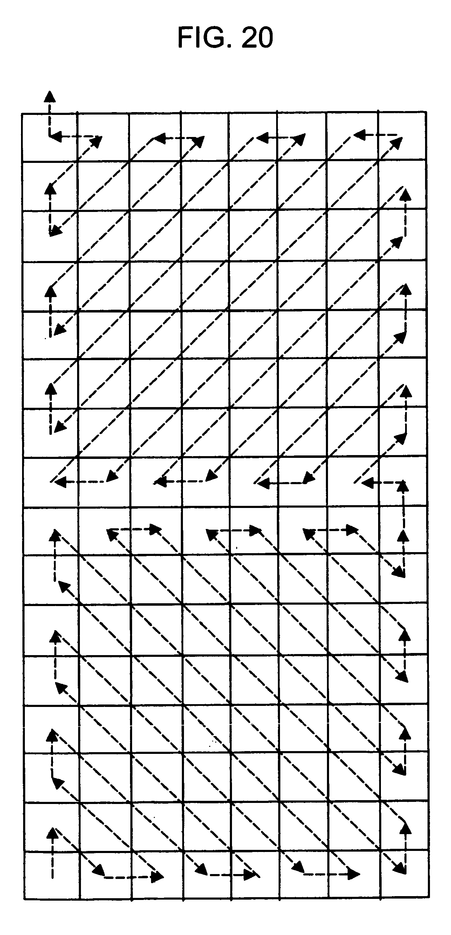

Fig. 20 shows a zigzag-combination scan pattern. In Fig. 20, the part 73 is composed of 8x8=64 pixels. In the above-described three scan patterns, a conversion error that occurred near a final point of scanning is transferred to the top of the next part 73. Thus, the distance between an error occurrence point and an error resolving point is long.

On the other hand, in the scan pattern shown in Fig. 20, a scanning end point is continued to a scanning start point by one stroke between adjoining parts. In this case, the distance between an error occurrence point and an error resolving point is short.

Alternatively, the scanning position of the scanning pointer may be randomly specified in the part 73. In this case, a conversion error is randomly resolved at an arbitrary position of the part 73 because the scanning is irregular. Accordingly, improvement of the image quality can be expected. The size of the part 73 should be small.

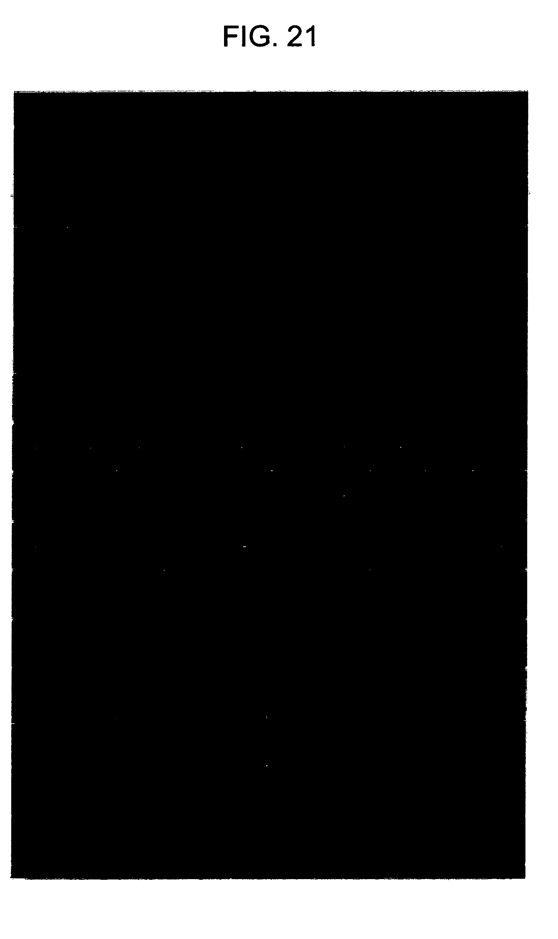

Finally, print examples obtained when the above-described scan patterns are adopted are shown. Fig. 21 shows a print example obtained when the zigzag-combination scan pattern is applied in a case where image density signals are input at the same tone value as that of Fig. 11.

In this case, too, cancellation of a conversion error occurs regularly. However, dots to resolve conversion errors are dispersed also in the horizontal direction of the screen. Accordingly, an average density can be expressed better.

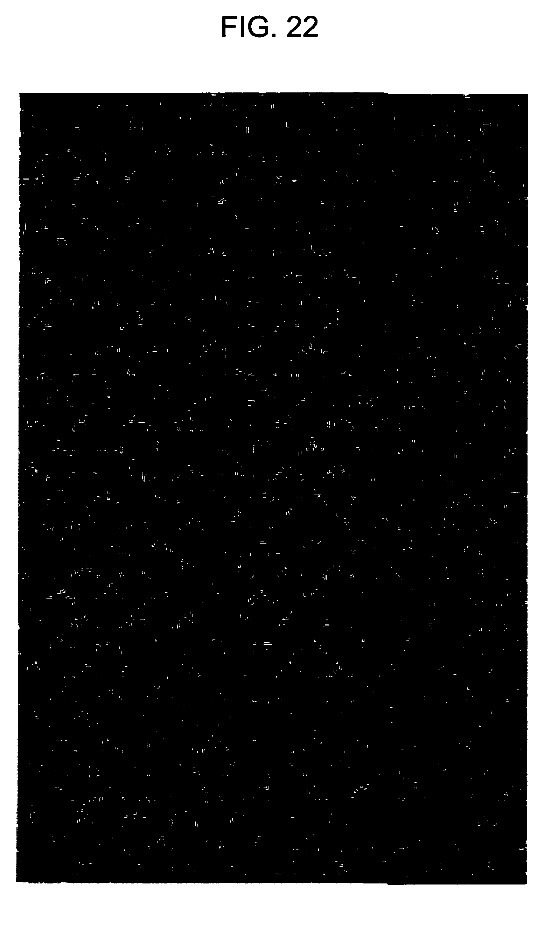

Fig. 22 shows a print example obtained when the zigzag-combination scan pattern is applied and a random number is superimposed on an input cumulative value Psum in a case where image density signals are input at the same tone value as that of Fig. 11.

In this case, positions where conversion errors are resolved do not have regularity. As a result, dots to resolve conversion errors are further dispersed in the screen. Accordingly, an average density can be expressed better.

### (B) Example of mounting

Each of the above-described tone converting devices can be mounted as a hardware device or a software program on various forms of image processing apparatuses.

Herein, for example, the tone converting device is mounted on a printing apparatus.

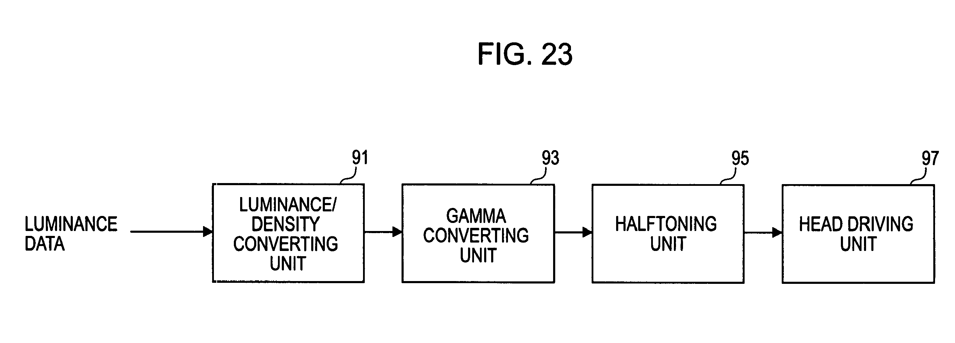

Fig. 23 shows an example of an internal configuration of the printing apparatus. In Fig. 23, an inkjet printer is used as the printing apparatus. When a laser printer is used, a head driving unit is unnecessary.

The printing apparatus includes a luminance/density converting unit 91, a gamma converting unit 93, a halftoning unit 95, and a head driving unit 97.

The luminance/density converting unit 91 is a processing device to convert print data to density data.

When the print data is a color image, the luminance/density converting unit 91 converts primary-color data (RGB: 24 bits) to color data adaptable to a printing process (YMCK: 32 bits). This converting process is performed by using a known technique. That is, LOG conversion, a masking process, and a UCR/BG process are applied. Typically, a three-dimensional lookup table is used.

When the print data is a monochrome image, the luminance/density converting unit 91 inverts luminance data into density data.

The gamma converting unit 93 is a signal processing unit to correct density data so that the density is linearly reproduced in a printed image. A printing apparatus has a characteristic that a reproduced density value is more likely to be saturated as a density value becomes larger. A gamma characteristic depends on combination of the type of recording medium, permeability of ink in the recording medium, density of ink, and so on. The gamma converting unit 93 corrects the gamma characteristic unique to this printing apparatus with a reversed characteristic.

The halftoning unit 95 is a processing device to reduce the tone value of multilevel and multi-tone density data so as to generate data adaptable to a PNM driving method. As the halftoning unit 95, the tone converting device according to any of the above-described embodiments is applied. For example, the tone converting device shown in Fig. 3 is applied. The halftoning unit 95 converts n-valued thresholds output from the tone converting device into n nozzle driving signals and outputs the signals.

The head driving unit 97 is a processing device to control ejection of ink drops. The head driving unit 97 controls ejection of ink drops from a print head on the basis of the nozzle driving signals supplied for each color.

As a result, a printed image can be output while various phenomena (e.g., pseudo contour, sweeping, and texture) as problems unique to the error diffusion method are improved.

Alternatively, a processing board or software corresponding to the luminance/density converting unit 91, the gamma converting unit 93, and the halftoning unit 95 may be mounted on the image processing apparatus.

### (C) Other Embodiments

(a) In the above-described fourth embodiment, the scan pattern table 83 connects to the scan pointer controlling unit 5. However, a scan pattern may be generated by an operation process.
(b) In any of the above-described embodiments, an output tone value Qout is set by using hardware (the output value setting unit 11 and the n-valued threshold circuit 35). However, as shown in each figure, this process may be executed in a software manner.
(c) In the above-described embodiment, a printing apparatus has been described as an example of the image processing apparatus. Other examples of the image processing apparatus include a multi-purpose computer, a video camera, a digital camera, a game machine, a mobile information terminal (e.g., a mobile computer, a mobile phone, a mobile game machine, or an electronic book), an image playback apparatus (e.g., an optical disc player or a home server), and a processing board or a processing card provided with a function according to the invention. Also, a multifunction apparatus having an image processing function and a printing function may be used.
(d) Various modifications of the above-described embodiments can be accepted within the scope of the present invention. Also, various modifications or alterations created on the basis of the description of this specification can be accepted.

## Claims

1. A tone converting device to convert an image density signal having m-valued tone into an image density signal having binary tone, m being a natural number, the tone converting device comprising:
an input signal accumulating-and-adding unit configured to accumulate and add sequentially input m-valued image density signals so as to generate a first cumulative sum;
an output signal accumulating-and-adding unit configured to accumulate and add binary image density signals as converted output so as to generate a second cumulative sum; and
an output tone setting unit configured to set a smaller value among two values to an output conversion value when the first cumulative sum is equal to the second cumulative sum or when the second cumulative sum is larger than the first cumulative sum, and to set a larger value among the two values to the output conversion value when the second cumulative sum is smaller than the first cumulative sum.

2. A tone converting device to convert an image density signal having m-valued tone into an image density signal having n-valued tone, m being a natural number and n being a natural number smaller than m, the tone converting device comprising:
an input signal accumulating-and-adding unit configured to accumulate and add sequentially input m-valued image density signals so as to generate a first cumulative sum;
an output signal accumulating-and-adding unit configured to accumulate and add n-valued image density signals as converted output so as to generate a second cumulative sum;
a differential calculating unit configured to calculate a differential value between the first cumulative sum and the second cumulative sum; and
an output tone setting unit configured to compare the calculated differential value with n-valued thresholds and to set the threshold corresponding to the comparison result as an output conversion value.

3. The tone converting device according to Claim 1 or 2,
wherein the m-valued image density signals are read in units of parts included in an input image.

4. The tone converting device according to Claim 2, further comprising:
a random number generating unit configured to generate random numbers having an amplitude of one-severalth of an inter-threshold level; and
an adding unit configured to add a generated random number to the first cumulative sum or the differential value.

5. The tone converting device according to Claim 2, further comprising:
a random number generating unit configured to generate random numbers having an amplitude of one-severalth of an inter-threshold level; and
an adding unit configured to add a generated random number to each of the n-valued thresholds compared with the differential value.

6. An image processing apparatus provided with a tone converting device to convert an image density signal having m-valued tone into an image density signal having binary tone, m being a natural number, the tone converting device comprising:
an input signal accumulating-and-adding unit configured to accumulate and add sequentially input m-valued image density signals so as to generate a first cumulative sum;
an output signal accumulating-and-adding unit configured to accumulate and add binary image density signals as converted output so as to generate a second cumulative sum; and
an output tone setting unit configured to set a smaller value among two values to an output conversion value when the first cumulative sum is equal to the second cumulative sum or when the second cumulative sum is larger than the first cumulative sum, and to set a larger value among the two values to the output conversion value when the second cumulative sum is smaller than the first cumulative sum.

7. An image processing apparatus provided with a tone converting device to convert an image density signal having m-valued tone into an image density signal having n-valued tone, m being a natural number and n being a natural number smaller than m, the tone converting device comprising:
an input signal accumulating-and-adding unit configured to accumulate and add sequentially input m-valued image density signals so as to generate a first cumulative sum;
an output signal accumulating-and-adding unit configured to accumulate and add n-valued image density signals as converted output so as to generate a second cumulative sum;
a differential calculating unit configured to calculate a differential value between the first cumulative sum and the second cumulative sum; and
an output tone setting unit configured to compare the calculated differential value with n-valued thresholds and to set the threshold corresponding to the comparison result as an output conversion value.

8. A printing apparatus provided with a tone converting device to convert an image density signal having m-valued tone into an image density signal having binary tone, m being a natural number, the tone converting device comprising:
an input signal accumulating-and-adding unit configured to accumulate and add sequentially input m-valued image density signals so as to generate a first cumulative sum;
an output signal accumulating-and-adding unit configured to accumulate and add binary image density signals as converted output so as to generate a second cumulative sum; and
an output tone setting unit configured to set a smaller value among two values to an output conversion value when the first cumulative sum is equal to the second cumulative sum or when the second cumulative sum is larger than the first cumulative sum, and to set a larger value among the two values to the output conversion value when the second cumulative sum is smaller than the first cumulative sum.

9. A printing apparatus provided with a tone converting device to convert an image density signal having m-valued tone into an image density signal having n-valued tone, m being a natural number and n being a natural number smaller than m, the tone converting device comprising:
an input signal accumulating-and-adding unit configured to accumulate and add sequentially input m-valued image density signals so as to generate a first cumulative sum;
an output signal accumulating-and-adding unit configured to accumulate and add n-valued image density signals as converted output so as to generate a second cumulative sum;
a differential calculating unit configured to calculate a differential value between the first cumulative sum and the second cumulative sum; and
an output tone setting unit configured to compare the calculated differential value with n-valued thresholds and to set the threshold corresponding to the comparison result as an output conversion value.

10. A tone converting method for converting an image density signal having m-valued tone into an image density signal having binary tone, m being a natural number, the tone converting method comprising the steps of:
accumulating and adding sequentially input m-valued image density signals so as to generate a first cumulative sum;
accumulating and adding binary image density signals as converted output so as to generate a second cumulative sum; and
setting a smaller value among two values to an output conversion value when the first cumulative sum is equal to the second cumulative sum or when the second cumulative sum is larger than the first cumulative sum, and setting a larger value among the two values to the output conversion value when the second cumulative sum is smaller than the first cumulative sum.

11. A tone converting method for converting an image density signal having m-valued tone into an image density signal having n-valued tone, m being a natural number and n being a natural number smaller than m, the tone converting method comprising the steps of:
accumulating and adding sequentially input m-valued image density signals so as to generate a first cumulative sum;
accumulating and adding n-valued image density signals as converted output so as to generate a second cumulative sum;
calculating a differential value between the first cumulative sum and the second cumulative sum; and
comparing the calculated differential value with n-valued thresholds and setting the threshold corresponding to the comparison result as an output conversion value.

12. A program allowing a computer functioning as a tone converting device to convert an image density signal having m-valued tone into an image density signal having binary tone, m being a natural number, to execute the steps of:
accumulating and adding sequentially input m-valued image density signals so as to generate a first cumulative sum;
accumulating and adding binary image density signals as converted output so as to generate a second cumulative sum; and
setting a smaller value among two values to an output conversion value when the first cumulative sum is equal to the second cumulative sum or when the second cumulative sum is larger than the first cumulative sum, and setting a larger value among the two values to the output conversion value when the second cumulative sum is smaller than the first cumulative sum.

13. A program allowing a computer functioning as a tone converting device to convert an image density signal having m-valued tone into an image density signal having n-valued tone, m being a natural number and n being a natural number smaller than m, to execute the steps of:
accumulating and adding sequentially input m-valued image density signals so as to generate a first cumulative sum;
accumulating and adding n-valued image density signals as converted output so as to generate a second cumulative sum;
calculating a differential value between the first cumulative sum and the second cumulative sum; and
comparing the calculated differential value with n-valued thresholds and setting the threshold corresponding to the comparison result as an output conversion value.
